# EUROPEAN PATENT SPECIFICATION

(11) **EP 3 065 472 B1**
(45) Date of publication and mention of the grant of the patent: **24.10.2018**
(21) Application number: 14857163.1
(22) Date of filing: 30.10.2014
(51) Int. Cl.: H04W 52/02, H04W 24/08, H04W 88/02

(54) **METHODS FOR CONFIGURING DRX AND FOR MONITORING CONTROL CHANNEL**
VERFAHREN ZUM KONFIGURIEREN VON DRX UND ZUR ÜBERWACHUNG EINES STEUERKANALS
PROCÉDÉS DE CONFIGURATION DE DRX ET DE SURVEILLANCE D'UN CANAL DE COMMANDE

(30) Priority: 31.10.2013 CN 201310533502
(43) Date of publication of application: 07.09.2016
(73) Proprietor: China Academy of Telecommunications Technology, Hai Dian District Beijing 100191 (CN)
(72) Inventor: WU, Yumin, Beijing 100191 (CN); ZHANG, Dajun, Beijing 100191 (CN); XU, Fangli, Beijing 100191 (CN)
(74) Representative: Nony
(86) International application number: PCT/CN2014/089923
(87) International publication number: WO 2015/062525

(56) References cited:
- CN-A- 102 325 005
- CN-A- 102 404 848
- CN-A- 102 932 822
- PANASONIC: "DRX procedure for dual connectivity", 3GPP DRAFT; R2-133313, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Ljubljana, Slovenia; 20131007 - 20131010 27 September 2013 (2013-09-27), XP050718989, Retrieved from the Internet: URL:http://www.3gpp.org/ftp/tsg_ran/WG2_RL 2/TSGR2_83bis/Docs/ [retrieved on 2013-09-27]
- ERICSSON: "DRX for dual connectivity", 3GPP DRAFT; R2-133433 - DRX FOR DUAL CONNECTIVITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Ljubljana, Slovenia; 20131007 - 20131011 28 September 2013 (2013-09-28), XP050719186, Retrieved from the Internet: URL:http://www.3gpp.org/ftp/tsg_ran/WG2_RL 2/TSGR2_83bis/Docs/ [retrieved on 2013-09-28]
- ETSI MCC: "Draft Report of 3GPP TSG RAN WG2 meeting #83bis", 3GPP DRAFT; DRAFT_REPORT_RAN2_83BIS_LJUBLJANA_V0.1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG RAN, no. San Francisco, USA; 20131111 - 20131115 28 October 2013 (2013-10-28), XP050752848, Retrieved from the Internet: URL:http://www.3gpp.org/ftp/tsg_ran/WG2_RL 2/TSGR2_83bis/Report/History/ [retrieved on 2013-10-28]
- ALCATEL-LUCENT SHANGHAI BELL ET AL: "DRX consideration for dual connectivity", 3GPP DRAFT; R2-133542, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Ljubljana, Slovenia; 20131007 - 20131011 28 September 2013 (2013-09-28), XP050719254, Retrieved from the Internet: URL:http://www.3gpp.org/ftp/tsg_ran/WG2_RL 2/TSGR2_83bis/Docs/ [retrieved on 2013-09-28]
- ITRI: "Discussion on DRX for Inter Node Radio Resource Aggregation", 3GPP DRAFT; R2-133105_DISCUSSION ON DRX FOR INTER NODE RADIO RESOURCE AGGREGATION_V1, 3RD GENERATION PARTNERSHIP PROJECT (3GPP), MOBILE COMPETENCE CENTRE ; 650, ROUTE DES LUCIOLES ; F-06921 SOPHIA-ANT , vol. RAN WG2, no. Ljubljana, Slovenia; 20131007 - 20131011 27 September 2013 (2013-09-27), XP050718864, Retrieved from the Internet: URL:http://www.3gpp.org/ftp/tsg_ran/WG2_RL 2/TSGR2_83bis/Docs/ [retrieved on 2013-09-27]

## Description

### Field

The present invention relates to the field of communications and particularly to methods for configuring DRX and monitoring a control channel.

### Background

As an increasing number of home evolved Node B (eNB), micro cells, relay nodes, and other local nodes are deployed, the traditional network architecture in which macro eNBs are predominant will evolve gradually into a network architecture in which more types of eNBs coexist, and provide network coverage at more levels. In order to improve the related performance in the network architecture where the various types of eNBs coexist, such a network architecture has been proposed that eNBs interoperate/are aggregated by a non-ideal link.

In this architecture, a part of Radio Bearers (RBs) of a User Equipment (UE) are in a Master Cell (MCell) hosted by a Master eNB (MeNB), where this part of the RBs include control plane Signaling Radio Bearers (SRBs) and user plane Data Radio Bearers (DRBs). The other part of the bearers of the same UE (including SRBs and DRBs) are in a Secondary Cell (SCell) hosted by a Secondary eNB (SeNB).

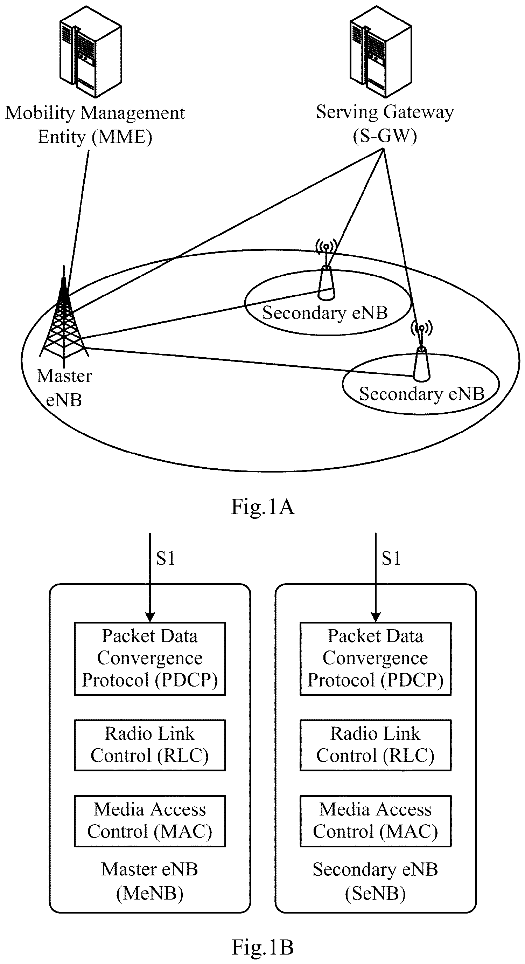

Fig.1A illustrates a possible multi-layer network coverage environment. In this scenario, RBs of a UE can be carried respectively by an MeNB hosted cell (MCell) and an SeNB hosted cell (SCell), where the separated RBs carried by the SeNB can include DRBs and/or SRBs.

There are the following two existing bearer separation architectures:
In an architecture 1 (as illustrated in Fig.1B):
There are separate bearers of a UE in an MeNB and an SeNB, and there are separate Packet Data Convergence Protocol (PDCP) entities on the respective eNBs.

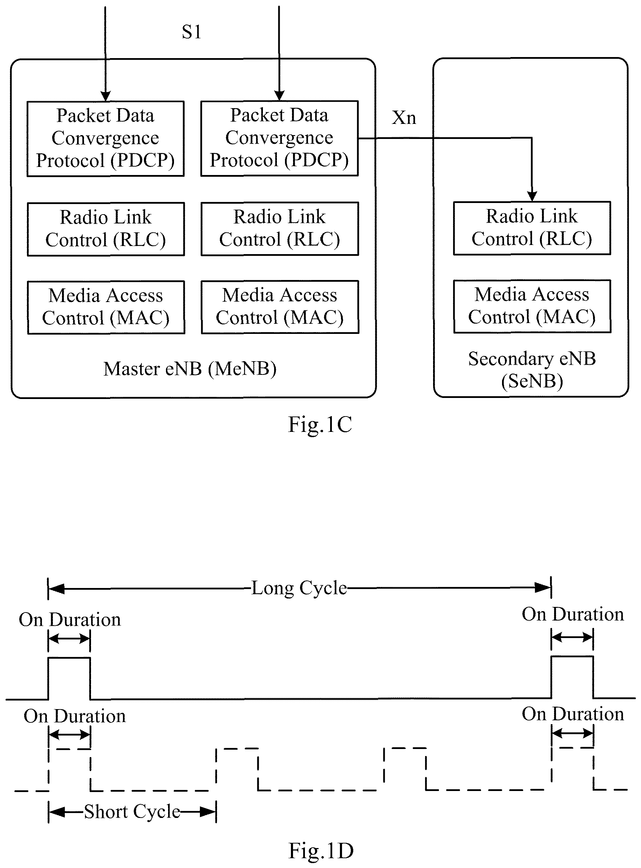

In an architecture 2 (as illustrated in Fig.1C):
There may be separate bearers over connections of a UE on an MeNB. A part of data carried by the same Evolved Packet System (EPS) on the MeNB are offloaded onto the SeNB for transmission over connections of the UE on the SeNB, where a Packet Data Convergence Protocol (PDCP) entity of the EPS is still in the MeNB, and there is a separate Radio Link Control (RLC) entity on the SeNB.

In an LTE system, in order to save power of a UE, the Discontinuous Reception (DRX) mechanism has been introduced, where the UE in a connected state monitors a control channel of an eNB discontinuously instead of monitoring a control channel of an eNB continuously, as illustrated in Fig.1D. In the figure, the On Duration represents a period of time in which the UE monitors a control channel, and in this period of time, a radio frequency channel is opened, and the UE monitors a control channel continuously. In the other period of time than the On Duration, the UE is in a power-saving state, and a radio frequency link thereof is closed. The On Duration occurs periodically at a particular cycle configured by the eNB. In order to avoid a too large latency in transmission between the eNB and the UE while saving power of the UE, the concepts of a Long Cycle and a Short Cycle have been introduced. The On Duration occurs in the short cycle more frequently than in the long cycle. If the UE is configured with both the long and short cycles, then the UE will not monitor at the long cycle until a short cycle timer (drxShortCycleTimer) expires after the short cycle is started.

If bearers are separated, then the UE may monitor in a longer period of time due to inconsistent DRX configurations of the UE between the MeNB and the SeNB, so that the UE may consume more power.

In summary, the UE cannot be configured instantly with reasonable DRX if the bearers are separated in the prior art, so that the UE has to monitor for a longer period of time and thus may consume more power.
The company PANASONIC, in the article entitled: "DRX procedure for dual connectivity", 3GPP DRAFT; R2-133313, 3GPP, MOBILE COMPETENCE CENTRE, discloses the concept of discontinuous reception (DRX) for LTE in order to provide reasonable battery consumption of the user equipment. This contribution is discussing the DRX procedure for the case of dual connectivity where UE is receiving resource allocations by two independent schedulers residing in MeNB and SeNB.

### Summary

Embodiments of the invention provide a method for configuring DRX so as to address the problem in the prior art that a UE can not be configured instantly with reasonable DRX if bearers are separated, so that the UE has to monitor for a longer time period and thus may consume more power.

The embodiments of the invention further provide a method for monitoring a control channel according to DRX configured in the embodiments of the invention.

An embodiment of the invention provides a method for configuring Discontinuous Reception (DRX), the method including:
determining, by a first network-side device, auxiliary information for a user equipment; and
sending, by the first network-side device, the auxiliary information to a second network-side device so that the second network-side device configures the user equipment with DRX according to the auxiliary information;
wherein a part of bearers of the user equipment are separated onto the second network-side device;
the auxiliary information comprises characteristic information of a service related to the bearers separated to the second network-side device; and
determining, by the first network-side device, the auxiliary information for the user equipment comprises:
determining, by the first network-side device, information about a past transmission time interval of packets of the service related to the bearers separated to the second network-side device, as the characteristic information; and/or
determining, by the first network-side device, information about a policy of the service related to the bearers separated to the second network-side device as the characteristic information;
wherein the first network-side device is a Master eNB, MeNB, or an Operation, Administration and Maintenance, OAM, device, and the second network-side device is a Secondary eNB, SeNB; or
the first network-side device is an SeNB, and the second network-side device is an MeNB.

In the embodiment of the invention, the first network-side device sends the auxiliary information to the second network-side device so that the second network-side device configures the user equipment with the DRX according to the auxiliary information. If the bearers are separated, then the second network-side device can configure the user equipment with the DRX according to the auxiliary information to thereby configure the user equipment
with the reasonable DRX more quickly so as to shorten a period of time in which the UE monitors, thus lowering power consumption of the UE.

Preferably the information about the policy of the service includes information about Quality of Service (QoS) of the service and/or information about a predicated packet transmission time interval of the service.

Preferably the first network-side device is an MeNB or an SeNB; and
before the first network-side device sends the auxiliary information to the second network-side device, the method further includes:
determining, by the first network-side device, that there is a need to send the auxiliary information to the second network-side device.

Preferably determining, by the first network-side device, whether there is a need to send the auxiliary information to the second network-side device by:
determining, by the first network-side device, whether there is a need to send the auxiliary information to the second network-side device according to QoS of the bearers of the user equipment on the first network-side device, and QoS of the bearers of the user equipment on the second network-side device; or
determining, by the first network-side device, whether there is a need to send the auxiliary information to the second network-side device according to receiver information of the user equipment.

An embodiment of the invention provides another method for configuring Discontinuous Reception (DRX), the method including:
receiving, by a second network-side device, auxiliary information for a user equipment from a first network-side device; and
configuring, by the second network-side device, the user equipment with DRX according to the auxiliary information;
wherein a part of bearers of the user equipment are separated onto the second network-side device;
the auxiliary information comprises the characteristic information of the service related to the bearers separated to the second network-side device; and the characteristic information of the service comprises information about a past transmission time interval of packets of the service related to the bearers separated to the second network-side device, and/or information about a policy of the service related to the bearers separated to the second network-side device;
wherein the first network-side device is a Master eNB, MeNB, or an Operation, Administration and Maintenance, OAM, device, and the second network-side device is a Secondary eNB, SeNB; or
the first network-side device is an SeNB, and the second network-side device is an MeNB.

In the embodiment of the invention, the second network-side device configures the user equipment with the DRX according to the auxiliary information. If the bearers are separated, then the second network-side device can configure the user equipment with the DRX according to the auxiliary information to thereby configure the user equipment with the reasonable DRX more quickly so as to shorten a period of time in which the UE monitors, thus lowering power consumption of the UE.

Preferably configuring, by the second network-side device, the user equipment with the DRX according to the auxiliary information includes:
determining, by the second network-side device, a reception time interval of the user
   equipment according to the auxiliary information; and
configuring, by the second network-side device, the user equipment with the DRX according to the determined reception time interval.

Preferably the information about the policy of the service includes information about QoS of the service and/or information about a predicated packet transmission time interval of the service.

An embodiment of the invention provides a method for monitoring a control channel, the method including:
receiving, by a user equipment, DRX configured by a second network-side device, wherein the DRX configured by the second network-side device is determined by the second network-side device according to received auxiliary information sent by a first network-side device; and
monitoring, by the user equipment, a control channel according to the configured DRX;
wherein a part of bearers of the user equipment are separated onto the second network-side device.

In the embodiment of the invention, the DRX, configured by the second network-side device, received by the user equipment is DRX configured by the second network-side device for the user equipment according to the auxiliary information. If the bearers are separated, then the second network-side device can configure the user equipment with the DRX according to the auxiliary information to thereby configure the user equipment with the reasonable DRX more quickly so as to shorten a period of time in which the UE monitors, thus lowering power consumption of the UE.

Preferably the auxiliary information includes a part or all of the following information:
information about DRX lastly configured for the user equipment by a serving eNB of the user equipment;
information about DRX configured by the second network-side device for the user equipment, recommended by the serving eNB of the user equipment; and
characteristic information of a service related to the bearers separated to the second network-side device.

Preferably the auxiliary information includes the information about the DRX lastly configured for the user equipment by the serving eNB of the user equipment and/or the information about DRX configured by the second network-side device for the user equipment, recommended by the serving eNB of the user equipment; and
configuring, by the second network-side device, the user equipment with the DRX according to the auxiliary information includes:
if the second network-side device has configured the user equipment with DRX, and an overlap time period between On Duration of the configured DRX and On Duration corresponding to the information about the DRX lastly configured for the user equipment by the serving eNB of the user equipment is shorter than a preset time period, or if the second network-side device has not configured the user equipment with DRX, then configuring the user equipment with the DRX so that the overlap time period between On Duration of the configured DRX and the On Duration corresponding to the information about the DRX lastly configured for the user equipment by the serving eNB of the user equipment is no shorter than the preset time period.

Preferably the auxiliary information includes the characteristic information of the service related to the bearers separated to the second network-side device; and
configuring, by the second network-side device, the user equipment with the DRX according to the auxiliary information includes:
determining, by the second network-side device, a reception time interval of the user equipment according to the auxiliary information; and
configuring, by the second network-side device, the user equipment with the DRX according to the determined reception time interval.

Preferably the characteristic information of the service includes information about a past transmission time interval of packets of the service related to the bearers separated to the second network-side device, and/or information about a policy of the service related to the bearers separated to the second network-side device.

Preferably the information about the policy of the service includes information about QoS of the service and/or information about a predicated packet transmission time interval of the service.

Preferably the first network-side device is a Master eNB (MeNB) or an Operation, Administration and Maintenance (OAM) device, and the second network-side device is a Secondary eNB (SeNB); or
the first network-side device is an SeNB, and the second network-side device is an MeNB.

An embodiment of the invention provides a method for monitoring a control channel, the method including:
receiving, by a user equipment, DRX configured by a second network-side device, wherein the DRX configured by the second network-side device is determined by the second network-side device according to received auxiliary information sent by a first network-side device; and
monitoring, by the user equipment, a control channel according to the configured DRX;
wherein a part of bearers of the user equipment are separated onto the second network-side device.

In the embodiment of the invention, the DRX, configured by the second network-side device, received by the user equipment is DRX configured by the second network-side device for the user equipment according to the auxiliary information. If the bearers are separated, then the second network-side device can configure the user equipment with the DRX according to the auxiliary information to thereby configure the user equipment with the reasonable DRX more quickly so as to shorten a period of time in which the UE monitors, thus lowering power consumption of the UE.

Preferably the auxiliary information includes a part or all of the following information:
information about DRX lastly configured for the user equipment by a serving eNB of the user equipment;
information about DRX configured by the second network-side device for the user equipment, recommended by the serving eNB of the user equipment; and
characteristic information of a service related to the bearers separated to the second network-side device.

Preferably before the user equipment receives the DRX configured by the second network-side device, the method further includes:
reporting, by the user equipment, receiver information of the user equipment to the first network-side device so that the first network-side device determines whether there is a need to send the auxiliary information to the second network-side device, according to the receiver information of the user equipment.

An embodiment of the invention provides a first network-side device for configuring Discontinuous Reception (DRX), the first network-side device including:
a determining module configured to determine auxiliary information for a user equipment; and
a sending module configured to send the auxiliary information to a second network-side device so that the second network-side device configures the user equipment with DRX according to the auxiliary information;
wherein a part of bearers of the user equipment are separated onto the second network-side device.

Preferably the auxiliary information includes a part or all of the following information:
information about DRX lastly configured for the user equipment by a serving eNB of the user equipment;
information about DRX configured by the second network-side device for the user equipment, recommended by the serving eNB of the user equipment; and
characteristic information of a service related to the bearers separated to the second network-side device.

Preferably the auxiliary information includes the information about DRX configured by the second network-side device for the user equipment, recommended by the serving eNB of the user equipment; and
the determining module is configured:
to determine the information about the DRX configured by the second network-side device for the user equipment, recommended by the serving eNB of the user equipment, as the auxiliary information;
wherein the information about the DRX recommended by the serving eNB is determined according to the characteristic information of a service related to the bearers separated to the second network-side device.

Preferably the auxiliary information includes the characteristic information of the service related to the bearers separated to the second network-side device; and
the determining module is configured:
to determine information about a past transmission time interval of packets of the service related to the bearers separated to the second network-side device, as the characteristic information; and/or to determine information about a policy of the service related to the bearers separated to the second network-side device as the characteristic information.

Preferably the information about the policy of the service includes information about Quality of Service (QoS) of the service and/or information about a predicated packet transmission time interval of the service.

Preferably the first network-side device is a Master eNB (MeNB) or an Operation, Administration and Maintenance (OAM) device, and the second network-side device is a Secondary eNB (SeNB); or
the first network-side device is an SeNB, and the second network-side device is an MeNB.

Preferably the first network-side device is an MeNB or an SeNB; and
the sending module is further configured:
to send the auxiliary information to the second network-side device upon determining that there is a need to send the auxiliary information to the second network-side device.

Preferably the sending module is configured:
to determine whether there is a need to send the auxiliary information to the second network-side device by:
determining whether there is a need to send the auxiliary information to the second network-side device according to QoS of the bearers of the user equipment on the first network-side device, and QoS of the bearers thereof on the second network-side device; or determining whether there is a need to send the auxiliary information to the second network-side device according to receiver information of the user equipment.

An embodiment of the invention provides a second network-side device for configuring Discontinuous Reception (DRX), the second network-side device including:
a first receiving module configured to receive auxiliary information for a user equipment from a first network-side device; and
a configuring module configured to configure the user equipment with DRX according to the auxiliary information;
wherein a part of bearers of the user equipment are separated onto the second network-side device.

Preferably the auxiliary information includes a part or all of the following information:
information about DRX lastly configured for the user equipment by a serving eNB of the user equipment;
information about DRX configured by the second network-side device for the user equipment, recommended by the serving eNB of the user equipment; and
characteristic information of a service related to the bearers separated to the second network-side device.

Preferably the auxiliary information includes the information about the DRX lastly configured for the user equipment by the serving eNB of the user equipment and/or the information about DRX configured for the user equipment by the second network-side device, recommended by the serving eNB of the user equipment; and
the configuring module is configured:
if the user equipment has been configured with DRX, and an overlap time period between On Duration of the configured DRX and On Duration corresponding to the information about the DRX lastly configured for the user equipment by the serving eNB of the user equipment is shorter than a preset time period, or if the user equipment has not been configured with DRX, to configure the user equipment with the DRX so that the overlap time period between On Duration of the configured DRX and the On Duration corresponding to the information about the DRX lastly configured for the user equipment by the serving eNB of the user equipment is no shorter than the preset time period.

Preferably the auxiliary information includes the characteristic information of the service related to the bearers separated to the second network-side device; and
the configuring module is configured:
to determine a reception time interval of the user equipment according to the auxiliary information; and to configure the user equipment with the DRX according to the determined reception time interval.

Preferably the characteristic information of the service includes information about a past transmission time interval of packets of the service related to the bearers separated to the second network-side device, and/or information about a policy of the service related to the bearers separated to the second network-side device.

Preferably the information about the policy of the service includes information about QoS of the service and/or information about a predicated packet transmission time interval of the service.

Preferably the first network-side device is a Master eNB (MeNB) or an Operation, Administration and Maintenance (OAM) device, and the second network-side device is a Secondary eNB (SeNB); or
the first network-side device is an SeNB, and the second network-side device is an MeNB.

An embodiment of the invention provides a user equipment for monitoring a control channel, the user equipment including:
a second receiving module configured to receive DRX configured by a second network-side device, wherein the DRX configured by the second network-side device is determined by the second network-side device according to received auxiliary information sent by a first network-side device; and
a processing module configured to monitor a control channel according to the configured DRX;
wherein a part of bearers of the user equipment are separated onto the second network-side device.

Preferably the auxiliary information includes a part or all of the following information:
information about DRX lastly configured for the user equipment by a serving eNB of the user equipment;
information about DRX configured by the second network-side device for the user equipment, recommended by the serving eNB of the user equipment; and
characteristic information of a service related to the bearers separated to the second network-side device.

Preferably the processing module is further configured:
to report receiver information of the user equipment to the first network-side device before the receiving module receives the DRX configured by the second network-side device, so that the first network-side device determines whether there is a need to send the auxiliary information to the second network-side device, according to the receiver information of the user equipment.

An embodiment of the invention provides a system for configuring Discontinuous Reception (DRX), the system including:
a first network-side device configured to determine auxiliary information for a user equipment, and to send the auxiliary information to a second network-side device;
the second network-side device configured to receive the auxiliary information for the user equipment from the first network-side device, and to configure the user equipment with DRX according to the auxiliary information; and
the user equipment configured to receive the DRX configured by the second network-side device, and to monitor a control channel according to the configured DRX;
wherein a part of bearers of the user equipment are separated onto the second network-side device.

In the embodiment of the invention, the first network-side device sends the auxiliary information to the second network-side device so that the second network-side device configures the user equipment with the DRX according to the auxiliary information. If the bearers are separated, then the second network-side device can configure the user equipment with the DRX according to the auxiliary information to thereby configure the user equipment with the reasonable DRX more quickly so as to shorten a period of time in which the UE monitors, thus lowering power consumption of the UE.

An embodiment of the invention provides a first network-side device for configuring Discontinuous Reception (DRX), the first network-side device including:
a processor configured to determine auxiliary information for a user equipment; and to send the auxiliary information to a second network-side device through a transceiver so that the second network-side device configures the user equipment with DRX according to the auxiliary information; and
the transceiver is configured to be controlled by the processor to transmit and receive data;
wherein a part of bearers of the user equipment are separated onto the second network-side device.

Preferably the auxiliary information includes a part or all of the following information:
information about DRX lastly configured for the user equipment by a serving eNB of the user equipment;
information about DRX configured by the second network-side device for the user equipment, recommended by the serving eNB of the user equipment; and
characteristic information of a service related to the bearers separated to the second network-side device.

Preferably the auxiliary information includes the information about the DRX configured for the user equipment by the second network-side device, determined by the serving eNB of the user equipment; and

Preferably the processor is configured:
to determine the information about the DRX configured by the second network-side device for the user equipment, recommended by the serving eNB of the user equipment, as the auxiliary information;
wherein the information about the DRX recommended by the eNB is determined according to characteristic information of a service related to the bearers separated to the second network-side device.

Preferably the auxiliary information includes the characteristic information of the service related to the bearers separated to the second network-side device; and
preferably the processor is configured:
to determine information about a past transmission time interval of packets of the service related to the bearers separated to the second network-side device, as the characteristic information; and/or to determine information about a policy of the service related to the bearers separated to the second network-side device as the characteristic information.

Preferably the information about the policy of the service includes information about Quality of Service (QoS) of the service and/or information about a predicated packet transmission time interval of the service.

Preferably the first network-side device is a Master eNB (MeNB) or an Operation, Administration and Maintenance (OAM) device, and the second network-side device is a Secondary eNB (SeNB); or
the first network-side device is an SeNB, and the second network-side device is an MeNB.

Preferably the first network-side device is an MeNB or an SeNB; and
preferably the processor is further configured:
to send the auxiliary information to the second network-side device through the transceiver upon determining that there is a need to send the auxiliary information to the second network-side device.

Preferably the processor is configured:
to determine whether there is a need to send the auxiliary information to the second network-side device by:
determining whether there is a need to send the auxiliary information to the second network-side device according to QoS of the bearers of the user equipment on the first network-side device, and QoS of the bearers of the user equipment on the second network-side device; or determining whether there is a need to send the auxiliary information to the second network-side device according to receiver information of the user equipment.

In the embodiment of the invention, the first network-side device sends the auxiliary information to the second network-side device so that the second network-side device configures the user equipment with the DRX according to the auxiliary information. If the bearers are separated, then the second network-side device can configure the user equipment with the DRX according to the auxiliary information to thereby configure the user equipment with the reasonable DRX more quickly so as to shorten a period of time in which the UE monitors, thus lowering power consumption of the UE.

An embodiment of the invention provides a second network-side device for configuring Discontinuous Reception (DRX), the second network-side device including:
a processor configured to receive auxiliary information for a user equipment from a first network-side device through a transceiver; and to configure the user equipment with DRX according to the auxiliary information; and
the transceiver is configured to be controlled by the processor to transmit and receive data;
wherein a part of bearers of the user equipment are separated onto the second network-side device.

Preferably the auxiliary information includes a part or all of the following information:
information about DRX lastly configured for the user equipment by a serving eNB of the user equipment;
information about DRX configured by the second network-side device for the user equipment, recommended by the serving eNB of the user equipment; and
characteristic information of a service related to the bearers separated to the second network-side device.

Preferably the auxiliary information includes the information about the DRX lastly configured for the user equipment by the serving eNB of the user equipment and/or the information about DRX configured for the user equipment by the second network-side device, recommended by the serving eNB of the user equipment; and
preferably the processor is configured:
if the user equipment has been configured with DRX, and an overlap time period between On Duration of the configured DRX and On Duration corresponding to the information about the DRX lastly configured for the user equipment by the serving eNB of the user equipment is shorter than a preset time period, or if the user equipment has not been configured with DRX, to configure the user equipment with the DRX so that the overlap time period between On Duration of the configured DRX and the On Duration corresponding to the information about the DRX lastly configured for the user equipment by the serving eNB of the user equipment is no shorter than the preset time period.

Preferably the auxiliary information includes the characteristic information of the service related to the bearers separated to the second network-side device; and
preferably the processor is configured:
to determine a reception time interval of the user equipment according to the auxiliary information; and to configure the user equipment with the DRX according to the determined reception time interval.

Preferably the characteristic information of the service includes information about a past transmission time interval of packets of the service related to the bearers separated to the second network-side device, and/or information about a policy of the service related to the bearers separated to the second network-side device.

Preferably the information about the policy of the service includes information about QoS of the service and/or information about a predicated packet transmission time interval of the service,

Preferably the first network-side device is a Master eNB (MeNB) or an Operation, Administration and Maintenance (OAM) device, and the second network-side device is a Secondary eNB (SeNB); or
the first network-side device is an SeNB, and the second network-side device is an MeNB.

In the embodiment of the invention, the first network-side device sends the auxiliary information to the second network-side device so that the second network-side device configures the user equipment with the DRX according to the auxiliary information. If the bearers are separated, then the second network-side device can configure the user equipment with the DRX according to the auxiliary information to thereby configure the user equipment with the reasonable DRX more quickly so as to shorten a period of time in which the UE monitors, thus lowering power consumption of the UE.

An embodiment of the invention provides a user equipment for monitoring a control channel, the user equipment including:
a processor configured to receive DRX configured by a second network-side device, wherein the DRX configured by the second network-side device is determined by the second network-side device according to received auxiliary information sent by a first network-side device; and
a processing module configured to monitor a control channel according to the configured DRX;
wherein a part of bearers of the user equipment are separated onto the second network-side device.

Preferably the auxiliary information includes a part or all of the following information:
information about DRX lastly configured for the user equipment by a serving eNB of the user equipment;
information about DRX configured by the second network-side device for the user equipment, recommended by the serving eNB of the user equipment; and
characteristic information of a service related to the bearers separated to the second network-side device.

Preferably the processor is further configured:
to report receiver information of the user equipment to the first network-side device through the transceiver before receiving the DRX configured by the second network-side device through the transceiver, so that the first network-side device determines whether there is a need to send the auxiliary information to the second network-side device, according to the receiver information of the user equipment.

In the embodiment of the invention, the first network-side device sends the auxiliary information to the second network-side device so that the second network-side device configures the user equipment with the DRX according to the auxiliary information. If the bearers are separated, then the second network-side device can configure the user equipment with the DRX according to the auxiliary information to thereby configure the user equipment with the reasonable DRX more quickly so as to shorten a period of time in which the UE monitors, thus lowering power consumption of the UE.

### Brief Description of the Drawings

Fig.1A is a schematic diagram of the multi-level network coverage environment in the prior art;
Fig.1B is a schematic diagram of the first bearer separation architecture in the prior art;
Fig.1C is a schematic diagram of the second bearer separation architecture in the prior art;
Fig.1D is a schematic diagram of the DRX mechanism in the prior art;
Fig.2A is a schematic structural diagram of a system for configuring DRX according to an embodiment of the invention;
Fig.2B is a first schematic diagram of DRX configured according to an embodiment of the invention;
Fig.2C is a second schematic diagram of DRX configured according to an embodiment of the invention;
Fig.2D is a third schematic diagram of DRX configured according to an embodiment of the invention;
Fig.3 is a first schematic structural diagram of a first network-side device in the system for configuring DRX according to an embodiment of the invention;
Fig.4 is a first schematic structural diagram of a second network-side device in the system for configuring DRX according to an embodiment of the invention;
Fig.5 is a first schematic structural diagram of a user equipment in the system for configuring DRX according to an embodiment of the invention;
Fig.6 is a second schematic structural diagram of the first network-side device in the system for configuring DRX according to an embodiment of the invention;
Fig.7 is a second schematic structural diagram of the second network-side device in the system for configuring DRX according to an embodiment of the invention;
Fig.8 is a second schematic structural diagram of the user equipment in the system for configuring DRX according to an embodiment of the invention;
Fig.9 is a schematic flow chart of a method for notifying by the first network-side device about auxiliary information according to an embodiment of the invention;
Fig.10 is a schematic flow chart of a method for configuring DRX by the second network-side device according to an embodiment of the invention; and
Fig.11 is a schematic flow chart of a method for monitoring by the user equipment a control channel according to an embodiment of the invention.

### Detailed Description of the Embodiments

In order to make the objects, technical solutions and advantages more apparent, the technical solutions according to the embodiments of the invention will be described below clearly and fully with reference to the drawings in the embodiments of the invention, and apparently the embodiments as described are merely a part but not all of the embodiments of the invention. All the other embodiments which can occur to those ordinarily skilled in the art from the embodiments here of the invention without any inventive effort shall fall into the scope of the invention as claimed.

It shall be appreciated that the technical solutions according to the invention can be applicable to various communication systems, e.g., a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced Long Term Evolution (LTE-A) system, a Universal Mobile Telecommunication System (UMTS), etc.

It shall be further appreciated that in the embodiments of the invention, a User Equipment (UE) includes but will not be limited to a Mobile Station (MS), a mobile terminal, a mobile telephone, a handset, a portable equipment, etc., and the user equipment can communicate with one or more core network through a Radio Access Network (RAN), for example, the user equipment can be a mobile phone (referred to as a "cellular" phone), a computer capable of wireless communication, etc., and the user equipment can also be a portable, a pocket, a handheld, a built-in-computer, or a vehicular mobile apparatus.

In the embodiments of the invention, a first network-side device sends auxiliary information to a second network-side device so that the second network-side device configures the user equipment with DRX according to the auxiliary information. If bearers are separated, then the second network-side device can configure the user equipment according to the auxiliary information so that the user equipment is configured with the reasonable DRX more quickly and the time in which the UE monitors is shorten, thus lowering power consumption of the UE.

Moreover in the prior art, before bearers are separated from an MeNB, the MeNB may have not configured DRX (because there are multiple bearers on the MeNB, where data of some of the bearers are transmitted continuously, and data of the other bearers are transmitted discontinuously), but there are sparsely transmitted data (i.e., intermittently transmitted data) over the bearers separated from the MeNB to an SeNB, so that the SeNB can not configure the UE with a reasonable DRX configuration until SeNB counts up service packets transmitted for some period of time, which results in that the UE may consume more power, and additional signaling may be consumed for configuration of DRX repeatedly.

In the embodiments of the invention, the UE will not be configured with DRX, or will be configured with DRX only once or several times, until the UE is configured with reasonable DRX (the UE can be configured with reasonable DRX in a much shorter period of time than in the prior art, so the UE will be configured with DRX for a smaller number of times in the embodiments of the invention than in the prior art) so as to further lower the power consumption of the UE and reduce the additional signaling consumption.

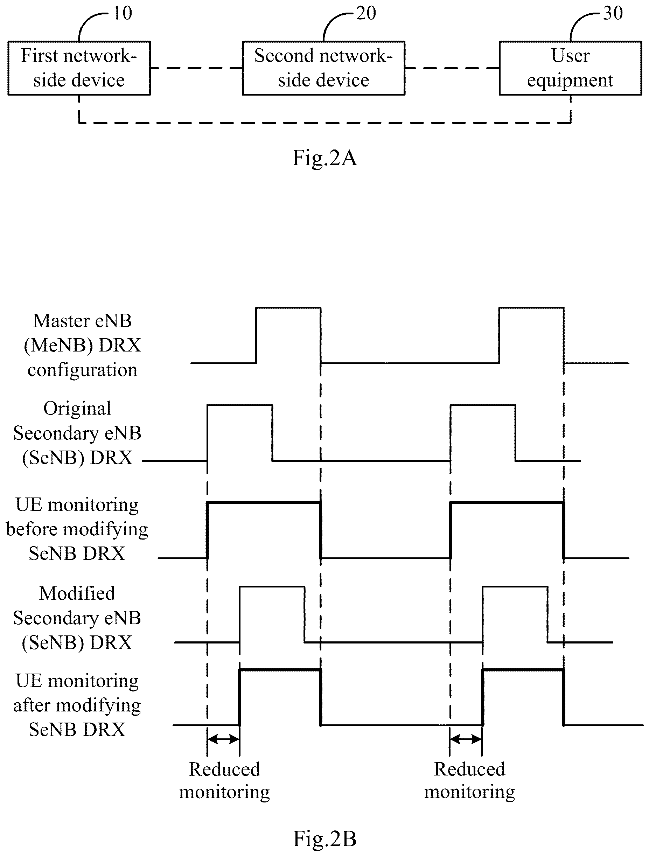

As illustrated in Fig.2A, a system for configuring DRX according to an embodiment of the invention includes a first network-side device 10, a second network-side device 20, and a user equipment 30.

The first network-side device 10 is configured to determine auxiliary information for the user equipment, and to send the auxiliary information to the second network-side device;
The second network-side device 20 is configured to receive the auxiliary information for the user equipment from the first network-side device, and to configure the user equipment with DRX according to the auxiliary information; and
The user equipment 30 is configured to receive the DRX configured by the second network-side device, and to monitor a control channel according to the configured DRX;
Where a part of bearers of the user equipment are separated onto the second network-side device.

In an embodiment of the invention, the first network-side device is an MeNB or an Operation Administration and Maintenance (OAM) device, and the second network-side device is an SeNB; or
In an embodiment of the invention, the first network-side device is an SeNB, and the second network-side device is an MeNB.

If the first network-side device is an MeNB or an SeNB, the bearers of the user equipment are separated, then one part of the bearers are on the second network-side device, and the other part of the bearers are on the first network-side device.

In an implementation, the auxiliary information includes but will not be limited to a part or all of the following information:
Information about DRX lastly configured for the user equipment by a serving eNB of the user equipment, where if the first network-side device is an MeNB or an SeNB, then the serving eNB of the user equipment here is the MeNB or the SeNB;
Information about DRX configured for the user equipment by the second network-side device, recommended by the serving eNB of the user equipment, where if the first network-side device is an MeNB or an SeNB, then the serving eNB of the user equipment here is the MeNB or the SeNB; and
Characteristic information of a service related to the bearers separated to the second network-side device.

The information above will be introduced below respectively.

In a first implementation, the auxiliary information includes information about DRX lastly configured for the user equipment by a serving eNB of the user equipment.

Specifically the first network-side device determines the information about the DRX lastly configured for the user equipment by the serving eNB of the user equipment as the auxiliary information, for example, the first network-side device can configure DRX of the user equipment on the first network-side device according to transmission time interval of data packets transmitted by the user equipment on the first network-side device, etc.; and
Correspondingly if the second network-side device has configured the user equipment with DRX, and the overlap time period between On Duration of the configured DRX and On Duration corresponding to the information about the DRX lastly configured for the user equipment by the serving eNB of the user equipment is shorter than a preset time period, or if the second network-side device has not configured the user equipment with DRX, then the user equipment will be configured with the DRX so that the overlap time between the On Duration of the configured DRX and the On Duration corresponding to the information about the DRX lastly configured for the user equipment by the serving eNB of the user equipment is no shorter than the preset time period.

That is, after the second network-side device receives the DRX configuration of the first network-side device, if the second network-side device determines that the overlap time period between the On Duration of the DRX previously configured for the user equipment overlaps and the On Duration of the received DRX of the first network-side device is a short or zero interval, or the second network-side device has not configured the user equipment with DRX on the second network-side device, then the second network-side device will adjust an interval of the On Duration of the DRX configuration of the user equipment on the second network-side device (or configures DRX), so that the overlap interval between the On Duration of the user equipment on the second network-side device and the On Duration of the DRX on the first network-side device may be increased as many as possible to thereby shorten the overall monitoring time by the user equipment on the two eNBs so as to save power.

Preferably the second network-side device can adjust the On Duration of the UE on the second network-side device by adjusting configuration parameters of the DRX, including related parameters of a long DRX cycle and a short DRX cycle (e.g., the length of the On Duration, onDurationTimer; the size of an inactivity timer of the UE, drx-InactivityTimer; a retransmission timer of the DRX, drx-RetransmissionTimer; a starting and ending time of the DRX, longDRX-CycleStartOffset; the length of the short DRX cycle, shortDRX-Cycle; the overall time length of the short cycle, drxShortCycleTimer; and other related parameters). Fig.2B illustrates the DRX adjustment and the shorten monitor time.

In a second implementation, the auxiliary information includes information about DRX configured for the user equipment by the second network-side device, recommended by the serving eNB of the user equipment.

Specifically the first network-side device determines as the auxiliary information the information about DRX configured by the second network-side device for the user equipment, recommended by the serving eNB of the user equipment.

Here the information about the DRX recommended by the eNB is determined according to characteristic information of a service related to the bearers separated to the second network-side device.

In an implementation, during the serving eNB separates the bearers to a target eNB, the eNB generates a DRX configuration related to the separated bearers (including one or more bearers) according to the characteristic of separated bearers (including one or more bearers).

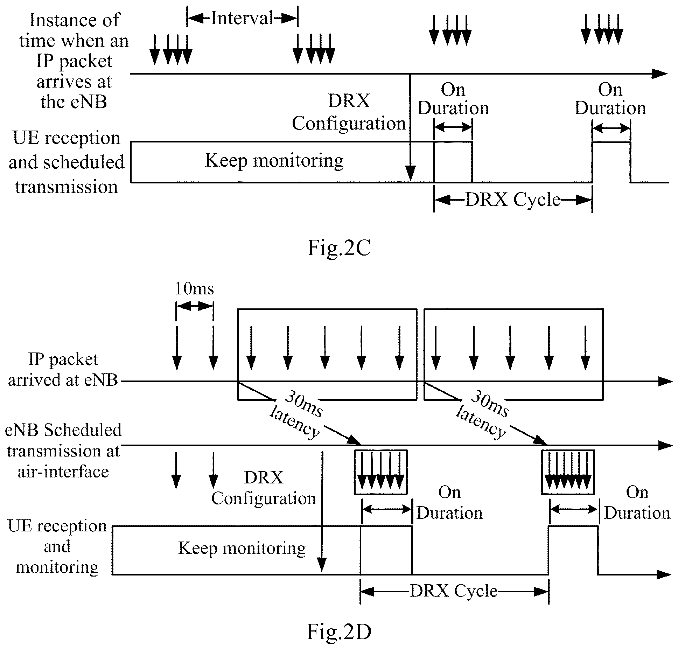

Fig.2C illustrates the setting of the DRX according to the characteristic of service packets (e.g., IP packets). Since data packets of different services arrive at the eNB at different intervals, the eNB can configure the user equipment of a set of DRX configuration according to a transmission characteristic (e.g., a transmission interval) of the service packet to be transmitted by the second network-side device to the user equipment. The eNB transmits data to the user equipment only during the On Duration of the user equipment, and the user equipment monitors a control channel only during the On Duration, so that power of the UE can be saved.

Correspondingly the second network-side device configures the UE with the DRX according to the DRX configuration recommended by the first network-side device, and a real air interface demand of the UE on the second network-side device.

For example, currently configured uplink and downlink air interface sub-frames of the first network-side device include first three uplink sub-frames and last seven downlink sub-frames among every ten sub-frames. When the first network-side device separates the bearers to the second network-side device, the first network-side device configures the On Duration of the DRX at the positions of the seven downlink sub-frames thereof according to the characteristic of service packet, for example, configuring the last five sub-frames among the last seven downlink sub-frames as the On Duration.

Correspondingly, currently configured uplink and downlink air interface sub-frames of the second network-side device include first seven uplink sub-frames and last three downlink sub-frames among every ten sub-frames. Since the second network-side device can not configure the last five sub-frames among the ten sub-frames as the On Duration according to the received DRX configuration, the second network-side device can adjust the On Duration of the DRX according to the real air interface configuration thereof to configure the last three sub-frames as the On Duration.

The description here has been given taking as an example the real air interface demand which is the air interface sub-frame configuration, but the real air interface demand in the embodiment of the invention will not be limited to the air interface sub-frame configuration. The second network-side device in the embodiment of the invention can configure the UE with the DRX according to any real air interface demand, and the DRX configuration recommended by the first network-side device. For example, the real air interface demand can alternatively be an air interface channel quality of the UE, a cell load, etc.

In a third implementation, the auxiliary information includes characteristic information of a service related to the bearers separated to the second network-side device.

Specifically the first network-side device determines information about a past transmission time interval of packets of the service related to the bearers separated to the second network-side device as the characteristic information; and/or

The first network-side device determines information about a policy of the service related to the bearers separated to the second network-side device as the characteristic information (here the information about the policy can be adjusted at any time as needed for the first network-side device, and then send to the second network-side device. For example, if a load of the first network-side device is increased, and a load of the second network-side device is low, then the first network-side device can adjust to transmit data packets to the second network-side device at a shorter interval.)

Where the information about the policy of the service includes information about Quality of Service (QoS) of the service and/or information about a predicated packet transmission time interval of the service.

Correspondingly the second network-side device determines a reception time interval of the user equipment according to the auxiliary information; and configures the user equipment with the DRX according to the determined reception time interval.

Where if the characteristic information includes information about a past packet transmission time interval, then the reception time interval can be determined according to the information about the past packet transmission time interval. For example, the second network-side device presets a transmission time for data schedule in the future according to the past packet transmission time interval, and after a data packet arrives at the second network-side device, the second network-side device schedules data transmission only at the preset transmission time.

If the characteristic information includes information about a predicated packet transmission time interval, then the reception time interval can be determined according to the information about the past packet transmission time interval. For example, the second network-side device presets a data transmission time for data schedule in the future according to the predicated packet transmission time interval, and after a data packet arrives at the second network-side device, the second network-side device schedules data transmission only at the preset transmission time.

If the characteristic information includes QoS information, then the reception time interval can be determined according to the QoS information. For example, as illustrated in Fig.2D, service data of the user equipment may arrive at the eNB at a shorter time interval (e.g., 1 0ms), and if the eNB schedules transmission via an air interface according to the time when an IP packet arrives, then no DRX can be set, so that the power of the UE can not be saved. If there is a required QoS latency of 100ms for service data, then the eNB can latency the scheduled air interface transmission time for the arriving IP packet (by 30ms as illustrated or more), and determine the reception time interval according to an interval of time at which the transmitted IP packet arrives, so that the UE can be configured with the DRX for power saving while guaranteeing the QoS demand.

If the first network-side device is an MeNB or an SeNB, then an embodiment of the invention further provides a solution of determining whether to send the auxiliary information, where the first network-side device firstly makes the determination, and if there is a need to send the auxiliary information, then the auxiliary information will be sent to the second network-side device, so that there is such a benefit that unnecessary auxiliary information can be avoided from being sent.

Specifically the first network-side device sends the auxiliary information to the second network-side device upon determining that there is a need to send the auxiliary information to the second network-side device.

The first network-side device can determine whether there is a need to send the auxiliary information to the second network-side device, in a number of approaches, several of which will be listed below:
In a first determination approach, the first network-side device determines whether there is a need to send the auxiliary information to the second network-side device, according to the QoS of the bearers of the user equipment on the first network-side device, and the QoS of the bearers of the user equipment on the second network-side device.

For example, it is determined according to the QoS whether a service to be transmitted is insensitive to a latency requirement (for a service insensitive to a latency requirement, a transmission time for data schedule on air interface can be delayed upon reception of downlink data), and if so, then it will be determined that there is a need to send the auxiliary information; otherwise, it will be determined that there is no need to send the auxiliary information; and
In another example, it is determined according to the QoS whether a service to be transmitted is a service with a high packet loss ratio (for a service with a high packet loss ratio, a transmission time for data schedule can be delayed upon reception of downlink data), and if so, then it will be determined that there is a need to send the auxiliary information; otherwise, it will be determined that there is no need to send the auxiliary information.

In a second determination approach, the first network-side device determines whether there is a need to send the auxiliary information to the second network-side device, according to receiver information of the user equipment.

In the second approach, the user equipment reports the receiver information of the user equipment to the first network-side device.

The receiver information includes but will not be limited to a part or all of the following information:
Receiver capability indication information, where for example, if the receiver capability indication information indicates that the user equipment can lower power consumption using a DRX parameter among coordinating receivers, then it will be determined that there is a need to send the auxiliary information; and in another example, if the receiver capability indication information indicates that the amount of charges in a battery of the user equipment is too low, then it will be determined that there is a need to send the auxiliary information; and
Information about the number of receivers, for example, if the information about the number of receivers indicates that only one receiver is configured to monitor over multiple carriers, then it will be determined that there is a need to send the auxiliary information.

If the user equipment can lower power consumption using a DRX parameter among coordinating receivers, then it will be determined that there is a need to send the auxiliary information to the second network-side device;
If there is only one receiver in the user equipment, configured to receive or monitor over multiple carriers, then it will be determined that there is a need to send the auxiliary information to the second network-side device; or
If there is a too low amount of charges in the battery of the user equipment, it will be determined that there is a need to send the auxiliary information to the second network-side device.

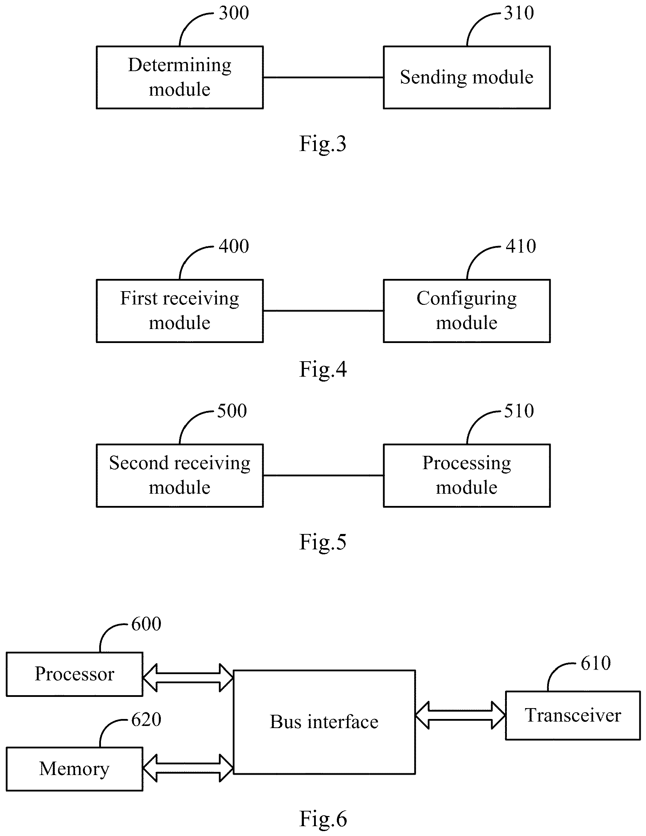

As illustrated in Fig.3 which is a first schematic structural diagram of the first network-side device in the system for configuring DRX according to an embodiment of the invention, the first network-side device includes a determining module 300 and a sending module 310, where:
The determining module 300 is configured to determine auxiliary information for a user equipment; and
The sending module 310 is configured to send the auxiliary information to a second network-side device so that the second network-side device configures the user equipment with DRX according to the auxiliary information;
Where a part of bearers of the user equipment are separated onto the second network-side device.

Preferably the auxiliary information includes a part or all of the following information:
Information about DRX lastly configured for the user equipment by a serving eNB of the user equipment;
Information about DRX configured by the second network-side device for the user equipment, recommended by the serving eNB of the user equipment; and
Characteristic information of a service related to the bearers separated to the second network-side device.

Preferably the auxiliary information includes the information about DRX configured for the user equipment by the second network-side device, recommended by the serving eNB of the user equipment; and
Preferably the determining module 300 is configured:
To determine the information about DRX configured by the second network-side device for the user equipment, recommended by the serving eNB of the user equipment, as the auxiliary information;
Where the information about DRX recommended by the eNB is determined according to characteristic information of a service related to the bearers separated to the second network-side device.

Preferably the auxiliary information includes the characteristic information of the service related to the bearers separated to the second network-side device; and
Preferably the determining module 300 is configured:
To determine information about a past transmission time interval of packets of the service related to the bearers separated to the second network-side device, as the characteristic information; and/or to determine information about a policy of the service related to the bearers separated to the second network-side device as the characteristic information.

Preferably the information about the policy of the service includes information about QoS of the service and/or information about a predicated packet transmission time interval of the service.

Preferably the first network-side device is an MeNB or an OAM device, and the second network-side device is an SeNB; or
The first network-side device is an SeNB, and the second network-side device is an MeNB.

Preferably the first network-side device is an MeNB or an SeNB; and
Preferably the sending module 310 is further configured:
To send the auxiliary information to the second network-side device upon determining that there is a need to send the auxiliary information to the second network-side device.

Preferably the sending module 310 is configured:
To determine whether there is a need to send the auxiliary information to the second network-side device by:
Determining whether there is a need to send the auxiliary information to the second network-side device according to QoS of the bearers of the user equipment on the first network-side device, and QoS of the bearers of the user equipment on the second network-side device; or determining whether there is a need to send the auxiliary information to the second network-side device according to receiver information of the user equipment.

As illustrated in Fig.4 which is a first schematic structural diagram of the second network-side device in the system for configuring DRX according to an embodiment of the invention, the second network-side device includes a first receiving module 400 and a configuring module 410, where:
The first receiving module 400 is configured to receive auxiliary information for a user equipment from a first network-side device; and
The configuring module 410 is configured to configure the user equipment with DRX according to the auxiliary information;
Where a part of bearers of the user equipment are separated onto the second network-side device.

Preferably the auxiliary information includes a part or all of the following information:
Information about DRX lastly configured for the user equipment by a serving eNB of the user equipment;
Information about DRX configured by the second network-side device for the user equipment, recommended by the serving eNB of the user equipment; and
Characteristic information about of a service related to the bearers separated to the second network-side device.

Preferably the auxiliary information includes the information about the DRX lastly configured for the user equipment by the serving eNB of the user equipment and/or the information about DRX configured for the user equipment by the second network-side device, recommended by the serving eNB of the user equipment; and
Preferably the configuring module 410 is configured:
If the user equipment has been configured with DRX, and an overlap time period between On Duration of the configured DRX and On Duration corresponding to the information about the DRX lastly configured for the user equipment by the serving eNB of the user equipment is shorter than a preset time period, or if the user equipment has not been configured with DRX, to configure the user equipment with the DRX so that the overlap time period between On Duration of the configured DRX and the On Duration corresponding to the information about the DRX lastly configured for the user equipment by the serving eNB of the user equipment is no shorter than the preset time period.

Preferably the auxiliary information includes the characteristic information of the service related to the bearers separated to the second network-side device; and
Preferably the configuring module 410 is configured:
To determine a reception time interval of the user equipment according to the auxiliary information; and to configure the user equipment with the DRX according to the determined reception time interval.

Preferably the characteristic information of the service includes a past transmission time interval of packets of the service related to the bearers separated to the second network-side device, and/or information about a policy of the service related to the bearers separated to the second network-side device.

Preferably the information about the policy of the service includes information about QoS of the service and/or information about a predicated packet transmission time interval of the service.

Preferably the first network-side device is an MeNB or an OAM device, and the second network-side device is an SeNB; or
The first network-side device is an SeNB, and the second network-side device is an MeNB.

As illustrated in Fig.5 which is a first schematic structural diagram of the user equipment in the system for configuring DRX according to an embodiment of the invention, the user equipment includes a second receiving module 500 and a processing module 510, where:
The second receiving module 500 is configured to receive DRX configured by a second network-side device, where the DRX configured by the second network-side device is determined by the second network-side device according to received auxiliary information sent from a first network-side device; and
The processing module 510 is configured to monitor a control channel according to the configured DRX;
Where a part of bearers of the user equipment are separated onto the second network-side device.

Preferably the auxiliary information includes a part or all of the following information:
Information about DRX lastly configured for the user equipment by a serving eNB of the user equipment;
Information about DRX configured by the second network-side device for the user equipment, recommended by the serving eNB of the user equipment; and
Characteristic information of a service related to the bearers separated to the second network-side device.

Preferably the processing module 510 is further configured:
To report receiver information of the user equipment to the first network-side device before the receiving module receives the DRX configured by the second network-side device, so that the first network-side device determines whether there is a need to send the auxiliary information to the second network-side device, according to the receiver information of the user equipment.

As illustrated in Fig.6 which is a second schematic structural diagram of the first network-side device in the system for configuring DRX according to an embodiment of the invention, the first network-side device includes:
A processor 600 is configured to determine auxiliary information for a user equipment; and to send the auxiliary information to a second network-side device through a transceiver 610 so that the second network-side device configures the user equipment with DRX according to the auxiliary information; and
The transceiver 610 is configured to be controlled by the processor 600 to transmit and receive data;
Where a part of bearers of the user equipment are separated onto the second network-side device.

Preferably the auxiliary information includes a part or all of the following information:
Information about DRX lastly configured for the user equipment by a serving eNB of the user equipment;
Information about DRX configured by the second network-side device for the user equipment, recommended by the serving eNB of the user equipment; and
Characteristic information of a service related to the bearers separated to the second network-side device.

Preferably the auxiliary information includes the information about DRX configured for the user equipment by the second network-side device, recommended by the serving eNB of the user equipment; and
Preferably the processor 600 is configured:
To determine the information about DRX configured by the second network-side device for the user equipment, recommended by the serving eNB of the user equipment, as the auxiliary information;
Where the information about DRX recommended by the eNB is determined according to characteristic information of a service related to the bearers separated to the second network-side device.

Preferably the auxiliary information includes the characteristic information of the service related to the bearers separated to the second network-side device; and
Preferably the processor 600 is configured:
To determine information about a past transmission time interval of packets of the service related to the bearers separated to the second network-side device, as the characteristic information; and/or to determine information about a policy of the service related to the bearers separated to the second network-side device as the characteristic information.

Preferably the information about the policy of the service includes information about QoS of the service and/or information about a predicated packet transmission time interval of the service.

Preferably the first network-side device is an MeNB or an OAM device, and the second network-side device is an SeNB; or
The first network-side device is an SeNB, and the second network-side device is an MeNB.

Preferably the first network-side device is an MeNB or an SeNB; and
Preferably the processor 600 is further configured:
To send the auxiliary information to the second network-side device upon determining that there is a need to send the auxiliary information to the second network-side device.

Preferably the sending module 310 is configured:
To determine whether there is a need to send the auxiliary information to the second network-side device by:
Determining whether there is a need to send the auxiliary information to the second network-side device according to QoS of the bearers of the user equipment on the first network-side device, and QoS of the bearers thereof on the second network-side device; or determining whether there is a need to send the auxiliary information to the second network-side device according to receiver information of the user equipment.

Here in Fig.6, the bus architecture can include any number of interconnection buses and bridges which are particularly configured to link various circuits together including one or more processor represented by the processor 600, and a memory represented by a memory 620. The bus architecture can further link various other circuits together, e.g., peripheral devices, a manostat, a power management circuit, etc., all of which are well known in the art, so a repeated description thereof will be omitted in this context. The bus interface provides an interface. The transceiver 610 can include a plurality of elements including a transmitter and a receiver configured to provide elements communicating with other various apparatuses over a transmission medium. The processor 600 is responsible for managing the bus architecture and typical processes, and the memory 620 can store data used by the processor 600 in performing operations.

The processor 600 is responsible for managing the bus architecture and typical processes, and the memory 620 can store data used by the processor 600 in performing operations.

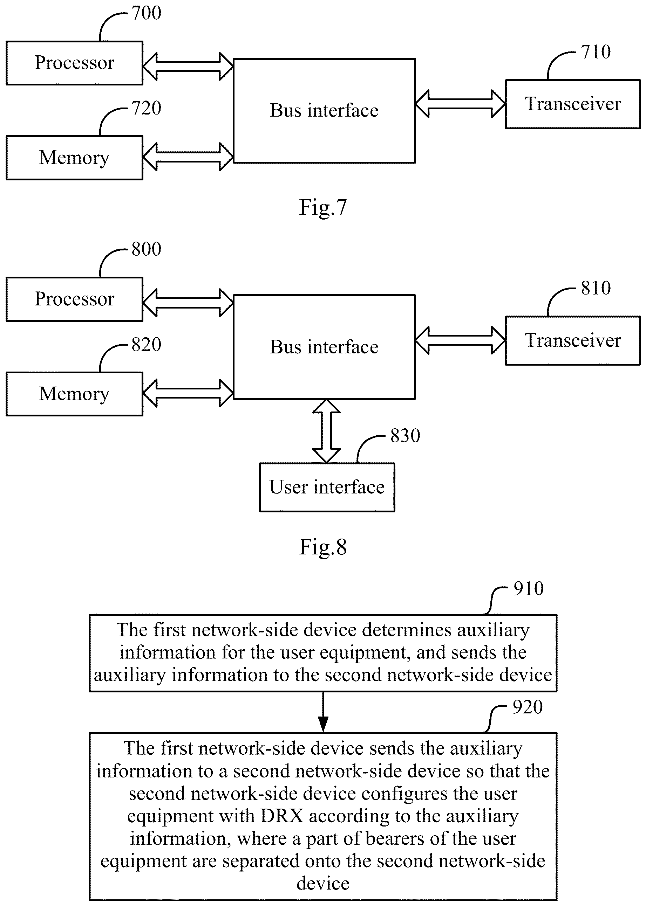

As illustrated in Fig.7 which is a second schematic structural diagram of the second network-side device in the system for configuring DRX according to an embodiment of the invention, the second network-side device includes:
A processor 700 is configured to receive auxiliary information for a user equipment from a first network-side device through a transceiver 710; and to configure the user equipment with DRX according to the auxiliary information;
The transceiver 710 is configured to be controlled by the processor 600 to transmit and receive data;
Where a part of bearers of the user equipment are separated onto the second network-side device.

Preferably the auxiliary information includes a part or all of the following information:
Information about DRX lastly configured for the user equipment by a serving eNB of the user equipment;
Information about DRX configured by the second network-side device for the user equipment, recommended by the serving eNB of the user equipment; and
Characteristic information of a service related to the bearers separated to the second network-side device.

Preferably the auxiliary information includes the information about the DRX lastly configured for the user equipment by the serving eNB of the user equipment and/or the information about DRX configured for the user equipment by the second network-side device, recommended by the serving eNB of the user equipment; and
Preferably the processor 700 is configured:
If the user equipment has been configured with DRX, and an overlap time period between On Duration of the configured DRX and On Duration corresponding to the information about the DRX lastly configured for the user equipment by the serving eNB of the user equipment is shorter than a preset time period, or if the user equipment has not been configured with DRX, to configure the user equipment with the DRX so that the overlap time period between On Duration of the configured DRX and the On Duration corresponding to the information about the DRX lastly configured for the user equipment by the serving eNB of the user equipment is no shorter than the preset time period.

Preferably the auxiliary information includes the characteristic information of the service related to the bearers separated to the second network-side device; and
Preferably the processor 700 is configured:
To determine a reception time interval of the user equipment according to the auxiliary information; and to configure the user equipment with the DRX according to the determined reception time interval.

Preferably the characteristic information of the service includes a past transmission time interval of packets of the service related to the bearers separated to the second network-side device, and/or information about a policy of the service related to the bearers separated to the second network-side device.

Preferably the information about the policy of the service includes information about QoS of the service and/or information about a predicated packet transmission time interval of the service.

Preferably the first network-side device is an MeNB or an OAM device, and the second network-side device is an SeNB; or
The first network-side device is an SeNB, and the second network-side device is an MeNB.

Here in Fig.7, the bus architecture can include any number of interconnection buses and bridges which are particularly configured to link various circuits together including one or more processor represented by the processor 700, and a memory represented by a memory 720. The bus architecture can further link various other circuits together, e.g., peripheral devices, a manostat, a power management circuit, etc., all of which are well known in the art, so a repeated description thereof will be omitted in this context. The bus interface provides an interface. The transceiver 710 can include a plurality of elements including a transmitter and a receiver configured to provide elements communicating with other various apparatuses over a transmission medium.

The processor 700 is responsible for managing the bus architecture and typical processes, and the memory 720 can store data used by the processor 700 in performing operations.

In an implementation, the first network-side device or the second network-side device may be an MeNB or an SeNB in different scenarios, so the functions of the first network-side device and the second network-side device can be integrated in an entity (that is, the modules of the first network-side device and the second network-side device reside in the entity), and the functions of the first network-side device or the functions of the second network-side device can be selectively enabled as needed. That is, the processor 600, the transceiver 610, the processor 700, and the transceiver 710 can be integrated in an entity; or the processor 600 and the processor 700 can be integrated into a processor, and the transceiver 610 and the transceiver 710 can be integrated into a transceiver, and then the processor and the transceiver can be integrated into the entity.

As illustrated in Fig.8 which is a second schematic structural diagram of the user equipment in the system for configuring DRX according to an embodiment of the invention, the user equipment includes:
A processor 800 is configured to receive DRX configured by a second network-side device through a transceiver 810, where the DRX configured by the second network-side device is determined by the second network-side device according to received auxiliary information sent by a first network-side device; and to monitor a control channel according to the configured DRX;
The transceiver 810 is configured to be controlled by the processor 600 to transmit and receive data;
Where a part of bearers of the user equipment are separated onto the second network-side device.

Preferably the auxiliary information includes a part or all of the following information:
Information about DRX lastly configured for the user equipment by a serving eNB of the user equipment;
Information about DRX configured by the second network-side device for the user equipment, recommended by the serving eNB of the user equipment; and
Characteristic information of a service related to the bearers separated to the second network-side device.

Preferably the processor 800 is further configured:
To report receiver information of the user equipment to the first network-side device through the transceiver 810 before receiving the DRX configured by the second network-side device through the transceiver 810, so that the first network-side device determines whether there is a need to send the auxiliary information to the second network-side device, according to the receiver information of the user equipment.

Here in Fig.8, the bus architecture can include any number of interconnection buses and bridges which are particularly configured to link various circuits together including one or more processor represented by the processor 800, and a memory represented by a memory 820. The bus architecture can further link various other circuits together, e.g., peripheral devices, a manostat, a power management circuit, etc., all of which are well known in the art, so a repeated description thereof will be omitted in this context. The bus interface provides an interface. The transceiver 810 can include a plurality of elements including a transmitter and a receiver configured to provide elements communicating with other various apparatuses over a transmission medium. For different user equipments, the user interface 830 can also be an interface via which needed internal and external devices can be connected, where the connected devices include but will not be limited to a keypad, a display, a speaker, a microphone, a joystick, etc.

The processor 800 is responsible for managing the bus architecture and typical processes, and the memory 820 can store data used by the processor 800 in performing operations.

Based upon the same inventive idea, an embodiment of the invention further provides a method for notifying by a first network-side device about auxiliary information, a method for configuring DRX by a second network-side device, and a method for monitoring a control channel by a user equipment, and since these methods correspond to devices which are the devices in the system for configuring DRX according to the embodiment of the invention, and address the problem under a similar principle to the system, reference can be made to the implementation of the system for implementations of these methods, so a repeated description thereof will be omitted here.

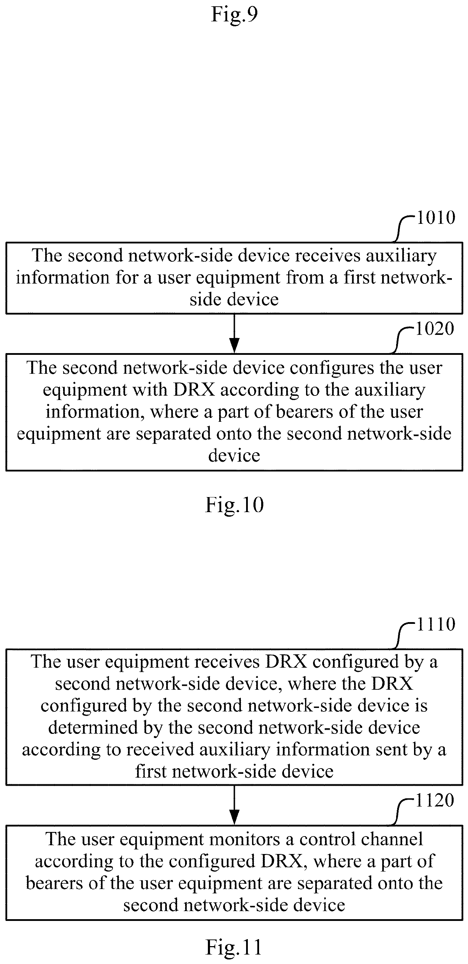

As illustrated in Fig.9, an embodiment of the invention provides a method for notifying by a first network-side device about auxiliary information, the method including:
In the step 910, the first network-side device determines auxiliary information for the user equipment; and
In the step 920, the first network-side device sends the auxiliary information to a second network-side device so that the second network-side device configures the user equipment with DRX according to the auxiliary information;
Where a part of bearers of the user equipment are separated onto the second network-side device.

Preferably the auxiliary information includes a part or all of the following information:
Information about DRX lastly configured for the user equipment by a serving eNB of the user equipment;
Information about DRX configured by the second network-side device for the user equipment, recommended by the serving eNB of the user equipment; and
Characteristic information of a service related to the bearers separated to the second network-side device.

Preferably the auxiliary information includes the information about DRX configured for the user equipment by the second network-side device, recommended by the serving eNB of the user equipment; and
Preferably the first network-side device determining the auxiliary information for the user equipment includes:
The first network-side device determines the information about DRX configured by the second network-side device for the user equipment, recommended by the serving eNB of the user equipment, as the auxiliary information;
Where the information about DRX recommended by the eNB is determined according to the characteristic information of a service related to the bearers separated to the second network-side device.

Preferably the auxiliary information includes the characteristic information of the service related to the bearers separated to the second network-side device; and
Preferably the first network-side device determining the auxiliary information for the user equipment includes:
The first network-side device determines information about a past transmission time interval of packets of the service related to the bearers separated to the second network-side device, as the characteristic information; and/or
The first network-side device determines information about a policy of the service related to the bearers separated to the second network-side device as the characteristic information.

Preferably the information about the policy of the service includes information about QoS of the service and/or information about a predicated packet transmission time interval of the service.

Preferably the first network-side device is an MeNB or an OAM device, and the second network-side device is an SeNB; or
The first network-side device is an SeNB, and the second network-side device is an MeNB.

Preferably the first network-side device is an MeNB or an SeNB; and
Preferably before the first network-side device sends the auxiliary information to the second network-side device, the method further includes:
The first network-side device determines that there is a need to send the auxiliary information to the second network-side device.

Preferably the first network-side device determines whether there is a need to send the auxiliary information to the second network-side device as follows:
The first network-side device determines whether there is a need to send the auxiliary information to the second network-side device according to QoS of the bearers of the user equipment on the first network-side device, and QoS of the bearers of the user equipment on the second network-side device; or
The first network-side device determines whether there is a need to send the auxiliary information to the second network-side device according to receiver information of the user equipment.

As illustrated in Fig.10, an embodiment of the invention provides a method for configuring DRX by a second network-side device, the method including the following steps:
In the step 1010, the second network-side device receives auxiliary information for a user equipment from a first network-side device; and
In the step 1020, the second network-side device configures the user equipment with DRX according to the auxiliary information;
Where a part of bearers of the user equipment are separated onto the second network-side device.

Preferably the auxiliary information includes a part or all of the following information:
Information about DRX lastly configured for the user equipment by a serving eNB of the user equipment;
Information about DRX configured by the second network-side device for the user equipment, recommended by the serving eNB of the user equipment; and
Characteristic information of a service related to the bearers separated to the second network-side device.

Preferably the auxiliary information includes the information about the DRX lastly configured for the user equipment by the serving eNB of the user equipment and/or the information about DRX configured for the user equipment by the second network-side device, determined by the serving eNB of the user equipment; and
The second network-side device configuring the UE with the DRX according to the auxiliary information includes:
If the second network-side device has configured the user equipment with DRX, and an overlap time period between On Duration of the configured DRX and On Duration corresponding to the information about the DRX lastly configured for the user equipment by the serving eNB of the user equipment is shorter than a preset time period, or if the second network-side device has not configured the user equipment with DRX, then the user equipment is configured with the DRX so that the overlap time period between On Duration of the configured DRX and the On Duration corresponding to the information about the DRX lastly configured for the user equipment by the serving eNB of the user equipment is no shorter than the preset time period.

Preferably the auxiliary information includes the characteristic information of the service related to the bearers separated to the second network-side device; and
The second network-side device configuring the UE with the DRX according to the auxiliary information includes:
The second network-side device determines a reception time interval of the user equipment according to the auxiliary information; and
The second network-side device configures the user equipment with the DRX according to the determined reception time interval.

Preferably the characteristic information of the service includes information about a past transmission time interval of packets of the service related to the bearers separated to the second network-side device, and/or information about a policy of the service related to the bearers separated to the second network-side device.

Preferably the information about the policy of the service includes information about QoS of the service and/or information about a predicated packet transmission time interval of the service.

Preferably the first network-side device is an MeNB or an OAM device, and the second network-side device is an SeNB; or
The first network-side device is an SeNB, and the second network-side device is an MeNB.

As illustrated in Fig.11, an embodiment of the invention provides a method for monitoring a control channel by a user equipment, the method including:
In the step 1110, the user equipment receives DRX configured by a second network-side device, where the DRX configured by the second network-side device is determined by the second network-side device according to received auxiliary information sent from a first network-side device; and
In the step 1120, the user equipment monitors a control channel according to the configured DRX;
Where a part of bearers of the user equipment are separated onto the second network-side device.

Preferably the auxiliary information includes a part or all of the following information:
Information about DRX lastly configured for the user equipment by a serving eNB of the user equipment;
Information about DRX configured by the second network-side device for the user equipment, recommended by the serving eNB of the user equipment; and
Characteristic information of a service related to the bearers separated to the second network-side device.

Preferably before the user equipment receives the DRX configured by the second network-side device, the method further includes:
The user equipment reports receiver information of the user equipment to the first network-side device so that the first network-side device determines whether there is a need to send the auxiliary information to the second network-side device, according to the receiver information of the user equipment.

In the embodiments of the invention, the base station (e.g., an access point) can refer to such a device in an access network that communicates with a wireless terminal over one or more sectors via an air interface. The base station can be configured to operate as a router between the wireless terminal and the other components of the access network to convert a received air interface frame into an IP packet, and a received IP packet into an air interface frame, where the other components of the access network can include an Internet Protocol (IP) network. The base station can further coordinate attribute management on the air interface. For example, the base station can be a base station (a Base Transceiver Station (BTS) in a GSM or CDMA system, can be a base station (a Node B) in a WCDMA system, or can be an evolved Node B (Node B or eNB or e-Node B) in an LTE system, but the invention will not be limited thereto.

Those skilled in the art shall appreciate that the embodiments of the invention can be embodied as a method, a system or a computer program product. Therefore the invention can be embodied in the form of an all-hardware embodiment, an all-software embodiment or an embodiment of software and hardware in combination. Furthermore the invention can be embodied in the form of a computer program product embodied in one or more computer useable storage mediums (including but not limited to a disk memory, a CD-ROM, an optical memory, etc.) in which computer useable program codes are contained.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

Although the preferred embodiments of the invention have been described, those skilled in the art benefiting from the underlying inventive concept can make additional modifications and variations to these embodiments. Therefore the appended claims are intended to be construed as encompassing the preferred embodiments and all the modifications and variations coming into the scope of the invention.

Evidently those skilled in the art can make various modifications and variations to the invention without departing from the scope of the invention. Thus the invention is also intended to encompass these modifications and variations thereto so long as the modifications and variations come into the scope of the claims appended to the invention and their equivalents.

## Claims

1. A method for configuring Discontinuous Reception, DRX, the method comprising:
determining (910), by a first network-side device, auxiliary information for a user equipment; and
sending (920), by the first network-side device, the auxiliary information to a second network-side device so that the second network-side device configures the user equipment with DRX according to the auxiliary information;
wherein a part of bearers of the user equipment are separated onto the second network-side device;
**characterized in that**, the auxiliary information comprises characteristic information of a service related to the bearers separated to the second network-side device; and
determining, by the first network-side device, the auxiliary information for the user equipment comprises:
determining, by the first network-side device, information about a past transmission time interval of packets of the service related to the bearers separated to the second network-side device, as the characteristic information; and/or
determining, by the first network-side device, information about a policy of the service related to the bearers separated to the second network-side device as the characteristic information;
wherein the first network-side device is a Master eNB, MeNB, and the second network-side device is a Secondary eNB, SeNB; or
the first network-side device is an SeNB, and the second network-side device is an MeNB.

2. The method according to claim 1, wherein the information about the policy of the service comprises information about Quality of Service, QoS, of the service and/or information about a predicated packet transmission time interval of the service.

3. The method according to claim 1, wherein the first network-side device is the MeNB or the SeNB; and
before the first network-side device sends the auxiliary information to the second network-side device, the method further comprises:
determining, by the first network-side device, that there is a need to send the auxiliary information to the second network-side device.

4. The method according to claim 3, wherein determining, by the first network-side device, whether there is a need to send the auxiliary information to the second network-side device by:
determining, by the first network-side device, whether there is a need to send the auxiliary information to the second network-side device according to QoS of the bearers of the user equipment on the first network-side device, and QoS of the bearers of the user equipment on the second network-side device; or
determining, by the first network-side device, whether there is a need to send the auxiliary information to the second network-side device according to receiver information of the user equipment.

5. A method for configuring Discontinuous Reception, DRX, the method comprising:
receiving (1010), by a second network-side device, auxiliary information for a user equipment from a first network-side device; and
configuring (1020), by the second network-side device, the user equipment with DRX according to the auxiliary information;
wherein a part of bearers of the user equipment are separated onto the second network-side device;
**characterized in that**, the auxiliary information comprises the characteristic information of the service related to the bearers separated to the second network-side device; and the characteristic information of the service comprises information about a past transmission time interval of packets of the service related to the bearers separated to the second network-side device, and/or information about a policy of the service related to the bearers separated to the second network-side device;
wherein the first network-side device is a Master eNB, MeNB, and the second network-side device is a Secondary eNB, SeNB; or
the first network-side device is an SeNB, and the second network-side device is an MeNB.

6. The method according to claim 5, wherein configuring, by the second network-side device, the user equipment with the DRX according to the auxiliary information comprises:
determining, by the second network-side device, a reception time interval of the user equipment according to the auxiliary information; and
configuring, by the second network-side device, the user equipment with the DRX according to the determined reception time interval.

7. The method according to claim 5, wherein the information about the policy of the service comprises information about QoS of the service and/or information about a predicated packet transmission time interval of the service.

## Patentansprüche

1. Verfahren zum Auslegen von diskontinuierlichem Empfang (DRX, Discontinuous Reception), wobei das Verfahren Folgendes umfasst:
Bestimmen (910), durch eine erste netzwerkseitige Vorrichtung, von Zusatzinformationen für eine Benutzereinrichtung; und
Senden (920), durch die netzwerkseitige Vorrichtung, der Zusatzinformationen an eine zweite netzwerkseitige Vorrichtung, sodass die zweite netzwerkseitige Vorrichtung die Benutzereinrichtung mit DRX entsprechend den Zusatzinformationen auslegt;
wobei ein Teil von Trägern der Benutzereinrichtung auf die zweite netzwerkseitige Vorrichtung abgetrennt ist;
**dadurch gekennzeichnet, dass** die Zusatzinformationen charakteristische Informationen eines Dienstes im Zusammenhang mit den auf die zweite netzwerkseitige Vorrichtung abgetrennten Trägern umfassen; und
wobei Bestimmen, durch die erste netzwerkseitige Vorrichtung, der Zusatzinformationen für die Benutzereinrichtung Folgendes umfasst:
Bestimmen, durch die erste netzwerkseitige Vorrichtung, von Informationen über ein vergangenes Sendezeitintervall von Paketen des Dienstes im Zusammenhang mit den auf die zweite netzwerkseitige Vorrichtung abgetrennten Trägern als die charakteristischen Informationen; und/oder
Bestimmen, durch die netzwerkseitige Vorrichtung, von Informationen über eine Richtlinie des Dienstes im Zusammenhang mit den auf die zweite netzwerkseitige Vorrichtung abgetrennten Trägern als die charakteristischen Informationen;
wobei die erste netzwerkseitige Vorrichtung ein Master eNB, MeNB ist und die zweite netzwerkseitige Vorrichtung ein sekundärer eNB, SeNB ist; oder
wobei die erste netzwerkseitige Vorrichtung ein SeNB ist und die zweite netzwerkseitige Vorrichtung ein MeNB ist.

2. Verfahren nach Anspruch 1, wobei die Informationen über die Richtlinie des Dienstes Informationen über die Dienstgüte (QoS, Quality of Service) des Dienstes und/oder Informationen über ein prädiziertes Paketsendezeitintervall des Dienstes umfasst.

3. Verfahren nach Anspruch 1, wobei die erste netzwerkseitige Vorrichtung der MeNB oder der SeNB ist; und
wobei das Verfahren, bevor die erste netzwerkseitige Vorrichtung die Zusatzinformationen an die zweite netzwerkseitige Vorrichtung sendet, ferner Folgendes umfasst:
Bestimmen, durch die erste netzwerkseitige Vorrichtung, dass eine Notwendigkeit zum Senden der Zusatzinformationen an die zweite netzwerkseitige Vorrichtung besteht.

4. Verfahren nach Anspruch 3, wobei Bestimmen, durch die erste netzwerkseitige Vorrichtung, ob eine Notwendigkeit zum Senden der Zusatzinformationen an die zweite netzwerkseitige Vorrichtung besteht, erfolgt durch:
Bestimmen, durch die erste netzwerkseitige Vorrichtung, ob eine Notwendigkeit zum Senden der Zusatzinformationen an die zweite netzwerkseitige Vorrichtung besteht, entsprechend der QoS der Träger der Benutzereinrichtung auf der ersten netzwerkseitigen Vorrichtung und der QoS der Träger der Benutzereinrichtung auf der zweiten netzwerkseitigen Vorrichtung; oder
Bestimmen, durch die erste netzwerkseitige Vorrichtung, ob eine Notwendigkeit zum Senden der Zusatzinformationen an die zweite netzwerkseitige Vorrichtung besteht, entsprechend den Empfängerinformationen der Benutzereinrichtung.

5. Verfahren zum Auslegen von diskontinuierlichem Empfang (DRX, Discontinuous Reception), wobei das Verfahren Folgendes umfasst:
Empfangen (1010), durch eine zweite netzwerkseitige Vorrichtung, von Zusatzinformationen für eine Benutzereinrichtung von einer ersten netzwerkseitigen Vorrichtung; und
Auslegen (1020), durch die zweite netzwerkseitige Vorrichtung, der Benutzereinrichtung mit DRX entsprechend den Zusatzinformationen;
wobei ein Teil von Trägern der Benutzereinrichtung auf die zweite netzwerkseitige Vorrichtung abgetrennt ist;
**dadurch gekennzeichnet, dass** die Zusatzinformationen die charakteristischen Informationen des Dienstes im Zusammenhang mit den auf die zweite netzwerkseitige Vorrichtung abgetrennten Trägern umfassen; und wobei die charakteristischen Informationen des Dienstes Informationen über ein vergangenes Sendezeitintervall von Paketen des Dienstes im Zusammenhang mit den auf die zweite netzwerkseitige Vorrichtung abgetrennten Trägern und/oder Informationen über eine Richtlinie des Dienstes im Zusammenhang mit den auf die zweite netzwerkseitige Vorrichtung abgetrennten Trägern umfassen;
wobei die erste netzwerkseitige Vorrichtung ein Master eNB, MeNB ist und die zweite netzwerkseitige Vorrichtung ein sekundärer eNB, SeNB ist; oder
wobei die erste netzwerkseitige Vorrichtung ein SeNB ist und die zweite netzwerkseitige Vorrichtung ein MeNB ist.

6. Verfahren nach Anspruch 5, wobei Auslegen, durch die zweite netzwerkseitige Vorrichtung, der Benutzereinrichtung mit dem DRX entsprechend den Zusatzinformationen Folgendes umfasst:
Bestimmen, durch die zweite netzwerkseitige Vorrichtung, eines Empfangszeitintervalls der Benutzereinrichtung entsprechend den Zusatzinformationen; und
Auslegen, durch die zweite netzwerkseitige Vorrichtung, der Benutzereinrichtung mit dem DRX entsprechend dem bestimmten Empfangszeitintervall.

7. Verfahren nach Anspruch 5, wobei die Informationen über die Richtlinie des Dienstes Informationen über die QoS des Dienstes und/oder Informationen über ein prädiziertes Paketsendezeitintervall des Dienstes umfasst.

## Revendications

1. Procédé pour configurer une réception discontinue, DRX (Discontinuous Reception), le procédé comprenant :
la détermination (910), par un premier dispositif côté réseau, des informations auxiliaires pour un équipement d'utilisateur ; et
l'envoi (920), par le premier dispositif côté réseau, des informations auxiliaires à un second dispositif côté réseau de sorte que le second dispositif côté réseau configure l'équipement d'utilisateur avec DRX en fonction des informations auxiliaires ;
dans lequel une partie des supports de l'équipement d'utilisateur est séparée sur le second dispositif côté réseau ;
**caractérisé en ce que** les informations auxiliaires comprennent une information caractéristique d'un service associé aux supports séparés du second dispositif côté réseau ; et
la détermination, par le premier dispositif côté réseau, du fait que les informations auxiliaires pour l'équipement d'utilisateur comprennent :
la détermination, par le premier dispositif côté réseau, des informations sur un intervalle de temps de transmission passé des paquets du service liés aux supports séparés du second dispositif côté réseau, en tant qu'informations caractéristiques ; et/ou
la détermination, par le premier dispositif côté réseau, des informations sur une politique de service liée aux supports séparés du second dispositif côté réseau, en tant qu'informations caractéristiques ;
dans lequel le premier dispositif côté réseau est un eNB maître ou principal, MeNB, et le second dispositif côté réseau est un eNB secondaire, SeNB ; ou
le premier périphérique côté réseau est un SeNB et le second dispositif côté réseau est un MeNB.

2. Procédé selon la revendication 1, dans lequel les informations relatives à la politique de service comprennent des informations sur la qualité de service, QoS, du service et/ou des informations sur un intervalle de temps de transmission prévu pour les paquets concernant le service.

3. Procédé selon la revendication 1, dans lequel le premier dispositif côté réseau est le MeNB ou le SeNB ;
avant que le premier dispositif côté réseau envoie les informations auxiliaires au second dispositif côté réseau, le procédé comprend en outre :
la détermination, par le premier dispositif côté réseau, qu'il est nécessaire d'envoyer les informations auxiliaires au second dispositif côté réseau.

4. Procédé selon la revendication 3, dans lequel on effectue la détermination, par le premier dispositif côté réseau, du fait qu'il soit nécessaire ou non d'envoyer les informations auxiliaires au second dispositif côté réseau par :
la détermination, par le premier dispositif côté réseau, du fait qu'il soit nécessaire d'envoyer les informations auxiliaires au second dispositif côté réseau en fonction de la qualité de service des supports de l'équipement d'utilisateur sur le premier dispositif côté réseau et de la qualité de service des supports de l'équipement d'utilisateur sur le second dispositif côté réseau ; ou
la détermination, par le premier dispositif côté réseau, du fait qu'il soit nécessaire ou non d'envoyer les informations auxiliaires au second dispositif côté réseau, en fonction des informations du récepteur de l'équipement d'utilisateur

5. Procédé pour configurer une réception discontinue, DRX, le procédé comprenant :
la réception (1010), par un second dispositif côté réseau, des informations auxiliaires pour un équipement d'utilisateur à partir d'un premier dispositif côté réseau ; et
la configuration (1020), par le second dispositif côté réseau, de l'équipement d'utilisateur avec DRX en fonction des informations auxiliaires ;
dans lequel une partie des supports de l'équipement d'utilisateur est séparée sur le second dispositif côté réseau ;
**caractérisé en ce que** les informations auxiliaires comprennent une information caractéristique du service associé aux supports séparés du second dispositif côté réseau ; et les informations caractéristiques du service comprennent des informations sur un intervalle de temps de transmission passé des paquets du service associé : aux supports séparés du second dispositif côté réseau et/ou des informations concernant une politique du service liée aux supports séparés du second dispositif côté réseau ;
dans lequel le premier dispositif côté réseau est un eNB maître ou principal, MeNB, et le second dispositif côté réseau est un eNB secondaire, SeNB ; ou
le premier périphérique côté réseau est un SeNB et le second dispositif côté réseau est un MeNB.

6. Procédé selon la revendication 5, dans lequel la configuration, par le second dispositif côté réseau, de l'équipement d'utilisateur avec le DRX en fonction des informations auxiliaires comprend :
la détermination, par le second dispositif côté réseau, d'un intervalle de temps de réception de l'équipement d'utilisateur en fonction des informations auxiliaires ; et
la configuration, par le second dispositif côté réseau, de l'équipement d'utilisateur avec le DRX en fonction de l'intervalle de temps de réception déterminé.

7. Procédé selon la revendication 5, dans lequel les informations relatives à la politique de service comprennent des informations sur la qualité de service, QoS, du service et/ou des informations sur un intervalle de temps de transmission prévu pour les paquets concernant le service.
